(19) Europäisches Patentamt
European Patent Office
Office européen des brevets

(11) **EP 3 065 276 B1**

(12) **EUROPEAN PATENT SPECIFICATION**

(45) Date of publication and mention
of the grant of the patent:
**22.04.2020 Bulletin 2020/17**

(51) Int Cl.:
*H02M 1/15* *(2006.01)*

(21) Application number: **15812933.8**

(86) International application number:
**PCT/CN2015/086525**

(22) Date of filing: **10.08.2015**

(87) International publication number:
**WO 2016/107181 (07.07.2016 Gazette 2016/27)**

(54) **ACTIVE FILTER AND COMMUNICATION SYSTEM**

AKTIVFILTER UND KOMMUNIKATIONSSYSTEM

FILTRE ACTIF ET SYSTÈME DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.01.2015 CN 201510003854**

(43) Date of publication of application:
**07.09.2016 Bulletin 2016/36**

(73) Proprietor: **Huawei Technologies Co., Ltd.
Longgang District
Shenzhen, Guangdong 518129 (CN)**

(72) Inventors:
• **YANG, Dan
Shenzhen
Guangdong 518129 (CN)**
• **WANG, Qinghai
Shenzhen
Guangdong 518129 (CN)**
• **ZHU, Yongfa
Shenzhen
Guangdong 518129 (CN)**

(74) Representative: **Epping - Hermann - Fischer
Patentanwaltsgesellschaft mbH
Schloßschmidstraße 5
80639 München (DE)**

(56) References cited:
**WO-A1-02/05412        WO-A1-2013/152785
CN-A- 102 025 145      CN-A- 104 506 026
KR-A- 20130 062 695    US-A- 5 483 148
US-A1- 2005 280 405**

• **DING, MING ET AL.: 'A Scheme for Suppressing
DC Ripple Current of Cascade Converter for
Energy Storage System' TRANSACTIONS OF
CHINA ELECTROTECHNICAL SOCIETY vol. 29,
no. 2, 28 February 2014, pages 47 - 52,
XP055294927**
• **CROSS A ET AL: "CONTROL OF DC-SIDE ACTIVE
FILTER FOR THREE-PHASE INVERTERS IN
AEROSPACE APPLICATIONS", 8TH EUROPEAN
CONFERENCE ON POWER ELECTRONICS AND
APPLICATIONS. LAUSANNE, CH, SEPT. 7 - 9,
1999; [EPE . EUROPEAN CONFERENCE ON
POWER ELECTRONICS AND APPLICATIONS],
EPE ASSOCIATION, BRUSSELS, BE, vol. CONF.
8, 7 September 1999 (1999-09-07), pages 1-10,
XP000890236, ISBN: 978-90-75815-04-7**

**Description**

**TECHNICAL FIELD**

Embodiments of the present invention relate to communications technologies, and in particular, to an active filter and a communications system.

**BACKGROUND**

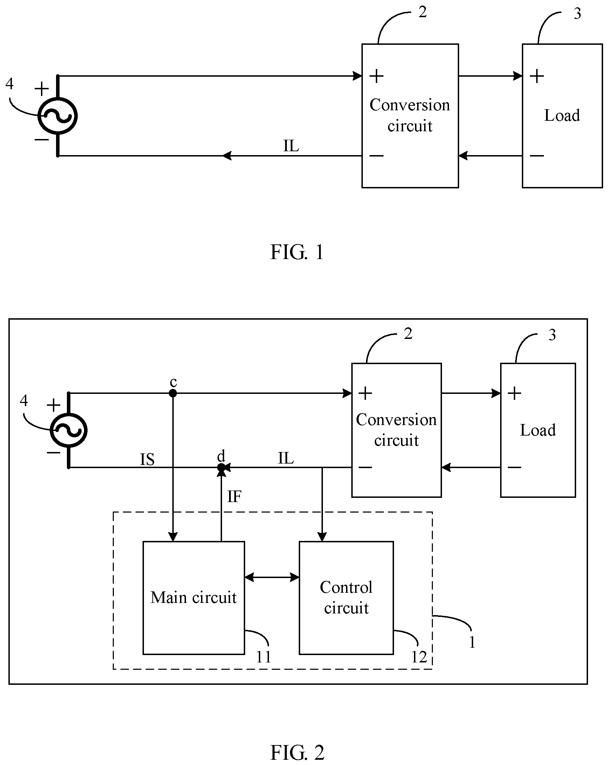

As shown in FIG. 1, an existing communications system generally includes a conversion circuit 2, a load 3, and a power source 4. The power source 4 generally provides a 48V input voltage, and in an actual application, the input voltage may fluctuate between 36V and 60V. The conversion circuit 2 is generally a direct current/direct current (DC/DC) conversion circuit. After converting a current provided by the power source 4, the conversion circuit 2 provides a converted current to the load 3, and supplies power to the load 3. The load 3 may be various communications devices in an actual communications system, and is not limited herein. However, because currents of some communications devices change greatly in different working scenarios, the load 3 is represented as a non-linear load that changes periodically, and further, a low-frequency fluctuation of the current input by the conversion circuit is caused. However, the current fluctuation may induce a voltage on spurious impedance of a power bus, that is, low-frequency noise. Because the power bus is also connected to another communications device, the low-frequency noise may spread to the another communications device, and interfere with normal working of the other communications devices. Therefore, in the communications system, it is necessary to eliminate the low-frequency noise caused by non-linearity of the load 3.

To solve the foregoing problem, a passive low-frequency filter solution is used in the prior art, that is, a low-pass filter is disposed in the communications system to implement filtering of the low-frequency noise. The low-pass filter is not shown herein. Reference may be made to the prior art. The low-pass filter is generally a filter circuit including an inductor, a capacitor, and/or a resistor.

Considering a loss, when the passive filter is used, because the inductor and the resistor are connected in series in the power bus, values of the inductor and the resistor cannot be too great. Consequently, a very large capacitor capacity is required, and a volume of the low-pass filter is huge, which cannot meet a requirement for miniaturization of the communications system.

KR 2013 0062695 A relates to a serial voltage compensation based automatic voltage adjuster capable of including an AC chopper to rapidly compensate the drop or rising of the input voltage. An automatic voltage adjuster comprises an AC chopper, a transformer, a bypass circuit, a voltage detector, a polarity detector, and a controller. The AC chopper converts and outputs the input voltage into the alternating current in a predetermined ratio. The transformer serially compensates the input voltage to the compensation voltage. The bypass circuit determines the phase of the compensation voltage. The voltage detector detects the input voltage. The polarity detector detects the polarity of the input voltage. The controller controls the switches of the AC chopper based on the input voltage which is detected by the voltage detector or the polarity of input voltage which is detected through the polarity detector.

US5483148A discloses an active filter and method for stabilizing a single-phase ac line to which multiple nonlinear loads are connected, which comprises two pairs of switches connected in two switching loops across a capacitor. One loop is connected to one leg of the line through an inductor and the other loop is connected to the other leg of the line directly. Voltage from the capacitor is followed and averaged to produce a scaling factor which is multiplied by a value corresponding to the actual ac line voltage. The resulting trajectory for the line current is compared to the actual line current and used to switch the pair of switches in the first loop to shape of the line current. A zero-crossing detector connected to receive the ac line voltage determines the polarity of the shaped current.

US 5 483 148 A relates to an active filter and method for stabilizing a single-phase ac line to which multiple nonlinear loads are connected, which comprises two pairs of switches connected in two switching loops across a capacitor. One loop is connected to one leg of the line through an inductor and the other loop is connected to the other leg of the line directly. Voltage from the capacitor is followed and averaged to produce a scaling factor which is multiplied by a value corresponding to the actual ac line voltage. The resulting trajectory for the line current is compared to the actual line current and used to switch the pair of switches in the first loop to shape of the line current. A zero-crossing detector connected to receive the ac line voltage determines the polarity of the shaped current.

CROSS A ET AL: "CONTROL OF DC-SIDE ACTIVE FILTER FOR THREE-PHASE INVERTERS IN AEROSPACE APPLICATIONS" 8TH EUROPEAN CONFERENCE ON POWER ELECTRONICS AND APPLICATIONS. LAUSANNE, CH, SEPT. 7-9, 1999; [EPE . EUROPEAN CONFERENCE ON POWER ELECTRONICS AND APPLICATIONS], EPE ASSOCIATION, BRUSSELS, BE, vol. CONF. 8, 7 September 1999 (1999-09-07), pages 1-10 relates to low-order DC-link current harmonics that result from unbalanced linear or non-linear three-phase inverter loads and describes the analysis and control of an active filter which requires no additional capacitance, to eliminate selected variable DC-link current harmonics.

WO 2013/152785 A1 relates to an electronic circuit comprising an ACRF comprising an active component, an energy storage unit, an input port and an output port. The electronic circuit comprises a control unit to control the ACRF. A detector detects a short circuit at the input port or the absence of an energy supply at the input port. The control unit controls the ACRF to function as an ACRF if the detector detects a power supply connected to the input port or that there is no short circuit at the input port, and controls the ACRF to stop functioning as an ACRF and to discharge energy from its energy storage unit to its output port if the detector detects a short circuit at the input port or no power supply connected to the input port.

WO 02/05412 A1 relates to an active filter that suppresses current harmonics generated in a dc bus by generating a compensating current that is approximately equal-but-opposite in polarity to the current harmonics. The active filter includes: an energy storage capacitor; a choke; a switch circuit; and a controller. The controller receives a current harmonics measurement for the dc bus and generates switch gating signals as a function of the current harmonics measurement. The switch circuit receives the switch gating signals from the controller and is operatively connected to the energy storage capacitor and the choke to selectively discharge the energy storage capacitor to inject current into the dc bus and to selectively draw current from the dc bus via the choke.

## SUMMARY

Embodiments of the present invention are defined by the appended claims. An active filter and a communications system are provided to effectively suppress low-frequency noise and meet a requirement for miniaturization of a communications system.

According to a first aspect, an embodiment of the present invention provides an active filter, where the active filter is connected in parallel between a power source and an input end of a conversion circuit, where an input end of the active filter is separately coupled to a positive electrode of the power source and a positive electrode of the input end of the conversion circuit, an output end of the active filter is separately coupled to a negative electrode of the power source and a negative electrode of the input end of the conversion circuit, and the active filter includes a main circuit and a control circuit, where: the control circuit is configured to: detect a first current output by the negative electrode of the input end of the conversion circuit to acquire a harmonic component in the first current, and generate a control signal according to the harmonic component; and the main circuit is configured to generate, under control of the control signal, a second current having a phase opposite to a phase of the harmonic component, so that a source current output by the power source and formed after the first current and the second current pass through the power source is a direct current and is built by the sum of the first current and the second current. The control signal includes a first control signal and a second control signal, where the second control signal is a signal having a phase opposite to a phase of the first control signal; the main circuit includes a full-bridge circuit, an inductor, and a capacitor, where the full-bridge circuit includes a first switching transistor, a second switching transistor, a third switching transistor, and a fourth switching transistor, where a series circuit including the first switching transistor and the fourth switching transistor is separately connected in parallel with the capacitor and a series circuit including the second switching transistor and the third switching transistor, one end of the inductor is coupled to a node between the first switching transistor and the fourth switching transistor, the other end of the inductor is used as the input end of the active filter, a node between the second switching transistor and the third switching transistor is used as the output end of the active filter, control ends of the first switching transistor and the third switching transistor separately receive the first control signal, and control ends of the second switching transistor and the fourth switching transistor separately receive the second control signal; and the main circuit is configured to perform, under control of the control signal, conductivity switching on the full-bridge circuit, and thereby control charging or discharging of the inductor and charging or discharging of the capacitor to generate the second current.

In a second possible implementation manner of the first aspect, the control signal includes a first control signal and a second control signal, where the second control signal is a signal having a phase opposite to a phase of the first control signal; the main circuit includes an inductor, a capacitor, a fifth switching transistor, and a sixth switching transistor, where the sixth switching transistor is connected in parallel with a series circuit including the capacitor and the fifth switching transistor, one end of the sixth switching transistor is coupled to one end of the inductor, another end of the sixth switching transistor is used as the output end of the active filter, the other end of the inductor is used as the input end of the active filter, a control end of the fifth switching transistor receives the first control signal, and a control end of the sixth switching transistor receives the second control signal; and the main circuit is configured to perform, under control of the control signal, conductivity switching on the fifth switching transistor and the sixth switching transistor, and thereby control charging or discharging of the inductor and charging or discharging of the capacitor to generate the second current.

With reference to the first possible implementation manner of the first aspect or the second possible implementation manner of the first aspect, in a third possible implementation manner of the first aspect, the control circuit includes a high-pass filter, an adder, a first proportional-integral controller, a second proportional-integral controller, a voltage comparator, and a phase inverter, where: the high-pass filter is configured to receive the first current, and perform filtering to obtain the harmonic component; the adder is configured to separately receive the harmonic component and the second current, and perform addition to obtain a third current; the first proportional-integral controller is configured to: separately receive a preset first reference voltage and an output voltage that is of the main circuit, and after subtracting the output voltage from the first reference voltage, perform first proportional integration to obtain a fourth current, where the output voltage of the main circuit is a voltage between two ends of the capacitor; the second proportional-integral controller is configured to: separately receive the third current and the fourth current, and after subtracting the third current from the fourth current, perform second proportional integration to obtain a first comparative voltage; the voltage comparator is configured to compare the first comparative voltage with a preset second reference voltage, and generate the first control signal according to a comparison result; and the phase inverter is configured to invert the phase of the first control signal to obtain the second control signal.

With reference to the third possible implementation manner of the first aspect, in a fourth possible implementation manner of the first aspect, the second reference voltage is a periodic triangular wave signal, and therefore, in any period, the voltage comparator is specifically configured to: if the first comparative voltage is higher than a level of the triangular wave signal, generate the first control signal for turning off the first switching transistor and the third switching transistor or turning off the fifth switching transistor; or if the first comparative voltage is lower than a level of the triangular wave signal, generate the first control signal for turning on the first switching transistor and the third switching transistor or turning on the fifth switching transistor.

With reference to the first possible implementation manner of the first aspect or the second possible implementation manner of the first aspect, in a fifth possible implementation manner of the first aspect, the control circuit includes a high-pass filter, an adder, a first proportional-integral controller, a hysteresis comparator, and a phase inverter, where: the high-pass filter is configured to receive the first current, and perform filtering to obtain the harmonic component; the adder is configured to separately receive the harmonic component and the second current, and perform addition to obtain a third current; the first proportional-integral controller is configured to: separately receive a first reference voltage and an output voltage that is of the main circuit, and after subtracting the output voltage from the first reference voltage, perform first proportional integration to obtain a fourth current, where the output voltage of the main circuit is a voltage between two ends of the capacitor; the hysteresis comparator is configured to compare the third current with the fourth current, and generate the first control signal according to a comparison result; and the phase inverter is configured to invert the phase of the first control signal to obtain the second control signal. With reference to the fifth possible implementation manner of the first aspect, in a sixth possible implementation manner of the first aspect, the hysteresis comparator is specifically configured to: if the third current is greater than the fourth current, generate the first control signal for turning on the first switching transistor and the third switching transistor or turning on the fifth switching transistor; or if the third current is less than the fourth current, generate the first control signal for turning off the first switching transistor and the third switching transistor or turning off the fifth switching transistor.

With reference to any implementation manner in the first possible implementation manner of the first aspect to the sixth possible implementation manner of the first aspect, in a seventh possible implementation manner of the first aspect, the inductor is a filter inductor, and the capacitor is an energy storage capacitor or a group of energy storage capacitors.

According to a second aspect, the present invention provides a communications system, where the communications system includes a power source, a conversion circuit, a non-linear load, and the active filter provided in the first aspect of the present invention and any implementation manner in the first possible implementation manner of the first aspect to the seventh possible implementation manner of the first aspect, where: the power source is configured to output the source current; and the conversion circuit is configured to: receive the source current through an input end, and after performing direct current/direct current conversion, output a converted current to the non-linear load through an output end, to supply power to the non-linear load.

In a first possible implementation manner of the second aspect, the communications system further includes an electromagnetic interference filter, where the electromagnetic interference filter is connected in parallel between the power source and the active filter, and configured to suppress high-frequency interference in the communications system.

By using the active filter and the communications system in the embodiments of the present invention, because the active filter is used to perform filtering, introduction of a passive filter and a large capacitor is avoided; the active filter has a small volume, and can effectively suppress low-frequency noise caused by a non-linear load and meet a requirement for miniaturization of the communications system.

**BRIEF DESCRIPTION OF DRAWINGS**

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.

FIG. 1 is a schematic structural diagram of an existing communications system;
FIG. 2 is a schematic structural diagram of a communications system using a passive filter according to an embodiment of the present invention;
FIG. 3 is a schematic diagram of a main circuit of a passive filter according to an embodiment of the present invention;
FIG. 4 is a schematic diagram of a main circuit of another passive filter according to an embodiment of the present invention;
FIG. 5 is a schematic diagram of a control circuit of a passive filter according to an embodiment of the present invention;
FIG. 6 is a logical diagram of a time sequence of a first control signal generated by the control circuit shown in FIG. 5;
FIG. 7 is a schematic diagram of a control circuit of another passive filter according to an embodiment of the present invention;
FIG. 8 is a logical diagram of a time sequence of a first control signal generated by the control circuit shown in FIG. 7; and
FIG. 9 is a schematic structural diagram of another communications system using a passive filter according to an embodiment of the present invention.

**DESCRIPTION OF EMBODIMENTS**

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

As shown in FIG. 2, an embodiment of the present invention provides a communications system, including an active filter 1, a conversion circuit 2, a load 3, and a power source 4, where: an input end of the active filter 1 is separately coupled to a positive electrode of the power source 4 and a positive electrode of an input end of the conversion circuit 2, an output end of the active filter 1 is separately coupled to a negative electrode of the power source 4 and a negative electrode of the input end of the conversion circuit 2, a positive electrode of an output end of the conversion circuit 2 is coupled to a positive electrode of the load 3, and a negative electrode of the output end of the conversion circuit 2 is coupled to a negative electrode of the load 3, thereby forming a conductive loop. The power source 4 is configured to output a source current; the conversion circuit 2 is configured to: receive the source current through the input end, and after performing direct current/direct current conversion, output a converted current to the load 3 through the output end, to supply power to the load 3.

The active filter 1 includes a main circuit 11 and a control circuit 12.

In this embodiment, the source current output by the power source 4 may be marked with IS; the output end of the conversion circuit 2 is coupled to the non-linear load 3; after a low-frequency fluctuation of the current input by the conversion circuit 2 to the load 3 is caused by non-linearity of the load 3, a first current output by the negative electrode of the input end of the conversion circuit and returned to the power source 4 includes a direct current component and an alternating current component (also referred to as a harmonic component). Herein, the first current is marked with IL, the direct current component of the first current IL is marked with $IL_{DC}$, and the harmonic component of the first current IL is marked with $IL_{AC}$; in addition, a second current output by the active filter 1 is marked with IF.

A relationship between the source current IS, the first current IL, and the second current IF is shown in a formula (1):

$$IS = IF + IL \qquad\qquad (1)$$

In addition, the first current IL includes the direct current component $IL_{DC}$ and the harmonic component $IL_{AC}$, as shown in a formula (2):

$$IL = IL_{DC} + IL_{AC} \qquad\qquad (2)$$

By substituting the formula (2) into the formula (1), a formula (3) may be obtained:

$$IS = IF + IL_{DC} + IL_{AC} \qquad (3)$$

It can be known that, in an ideal case, to suppress low-frequency noise, that is, to eliminate the current fluctuation caused by the non-linear load 3, so that the source current IS output by the power source 4 is approximate to the direct current, that is, $IS = IL_{DC}$, the active filter 1 needs to output the second current IF having a phase opposite to a phase of the harmonic component $IL_{AC}$ to cancel the harmonic component $IL_{AC}$. That is, the second current IF meets a formula (4):

$$IF + IL_{AC} = 0 \qquad (4)$$

The following describes in detail how to suppress low-frequency noise with reference to the main circuit 11 and the control circuit 12 of the active filter 1 in this embodiment.

In this embodiment, the control circuit 12 may be configured to: detect the first current IL output by the negative electrode of the input end of the conversion circuit 2 to acquire the harmonic component $IL_{AC}$ in the first current, and generate a control signal according to the harmonic component $IL_{AC}$; and
the main circuit 11 is configured to generate, under control of the control signal, the second current IF having the phase opposite to the phase of the harmonic component $IL_{AC}$, so that the source current IS formed after the first current IL and the second current IF pass through the power source is a direct current.

In the communications system in this embodiment, because an active filter 1 is used to generate a second current IF having a phase opposite to a phase of a harmonic component $IL_{AC}$, a current fluctuation caused by non-linearity of a load 4 is canceled, low-frequency noise in the communications system is suppressed, and interference to another communications device in the communications system is avoided.

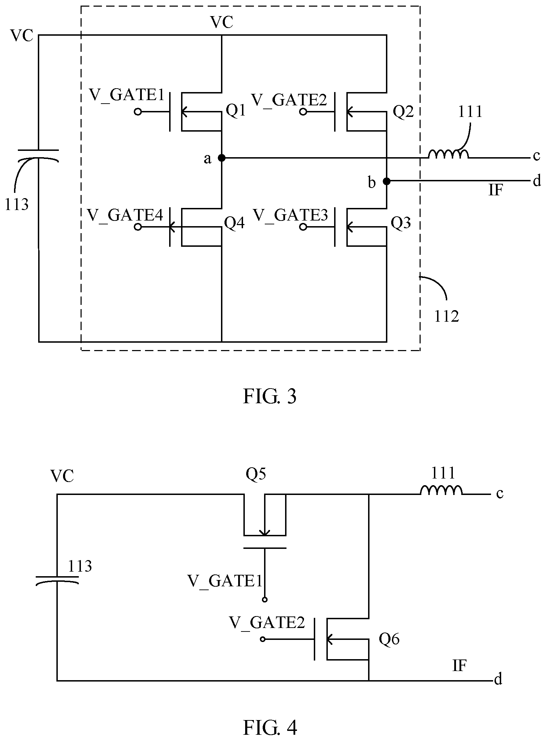

In an implementation manner of this embodiment, a specific structure of the main circuit 11 may be shown in FIG. 3. In FIG. 3, the main circuit 11 may include:
an inductor 111, a full-bridge circuit 112, and a capacitor 113, where the full-bridge circuit 112 may include a first switching transistor Q1, a second switching transistor Q2, a third switching transistor Q3, and a fourth switching transistor Q4. It should be noted that a person skilled in the art should know that, the switching transistors in the full-bridge circuit 112 in this embodiment of the present invention may be various switching transistors including control ends in the prior art, such as a metal oxide semiconductor (Metal Oxide Semiconductor, MOS) transistor, a transistor, a field effect transistor. The inductor 111 may be a filter inductor, and the capacitor 113 may include an energy storage capacitor or a group of energy storage capacitors. For details about requirements of the full-bridge circuit on the filter inductor and the energy storage capacitor, reference may be made to the prior art. In addition, the control signal generated by the control circuit 12 may specifically include a first control signal and a second control signal, where the second control signal is a signal having a phase opposite to a phase of the first control signal. In FIG. 3, an N-type MOS (NMOS) transistor is used to exemplarily describe each switching transistor in the main circuit 11, where each NMOS transistor may receive a control signal through a gate (that is, a control end) to control conductivity between a source and a drain of the NMOS transistor. In FIG. 3, V_GATE1, V_GATE2, V_GATE3, and V_GATE4 are respectively used to mark a control signal of a gate of each NMOS transistor, where V_GATE1 and V_GATE3 are the first control signal, and V_GATE2 and V_GATE3 are the second control signal. When the control signal is of a high level, the NMOS transistor is turned on; when the control signal is of a low level, the NMOS transistor is turned off. Working principles of another switching transistor such as a P-type MOS (PMOS) transistor or a transistor are similar to working principles of the NMOS transistor, and are not further described herein. For details, reference may be made to the prior art.

Specifically, in the full-bridge circuit 112, a series circuit including the first switching transistor Q1 and the fourth switching transistor Q4 is separately connected in parallel with the capacitor 113 and a series circuit including the second switching transistor Q2 and the third switching transistor Q3, one end of the inductor 111 is coupled to a node a between the first switching transistor Q1 and the fourth switching transistor Q4, and the other end of the inductor 111 is used as the input end of the active filter 1 and is separately coupled to the positive electrode of the power source 4 and the positive electrode of the input end of the conversion circuit 2, that is, as shown in FIG. 2, jointly coupled to a node c; a node b between the second switching transistor Q2 and the third switching transistor Q3 is used as the output end of the active filter 1, and is separately coupled to the negative electrode of the power source 4 and the negative electrode of the input end of the conversion circuit 2, that is, as shown in FIG. 2, jointly coupled to a node d; control ends of the first switching transistor Q1 and the third switching transistor Q3 separately receive the first control signal, for example, V_GATE1 and V_GATE3; and control ends of the second switching transistor Q2 and the fourth switching transistor Q4 separately receive the second control signal, for example, V_GATE2 and V_GATE4. A person skilled in the art should know that the coupling in this embodiment of the present invention includes a direct connection manner, an indirect connection manner, and the like.

The main circuit 11 is configured to perform, under control of the control signal, conductivity switching on the full-bridge circuit 112, and thereby control charging or discharging of the inductor 111 and charging or discharging of the capacitor 113 to generate the second current IF.

Herein, a process about how the main circuit 11 controls conductivity switching on the full-bridge circuit 112, and thereby controls charging or discharging of the inductor 111 and charging or discharging of the capacitor 113, is described in brief.

(1) When the switching transistors Q1 and Q3 are turned on simultaneously, the inductor 111 is discharged, and the second current IF is reduced. At the same time, the capacitor 113 is also discharged, and a voltage (which may also become an output voltage of the main circuit 11, and is marked with VC herein) of the capacitor 113 is also reduced. According to a principle of the full-bridge circuit, because phases of control signals of the switching transistors Q2 and Q4 are opposite to phases of control signals of the switching transistors Q1 and Q3, the switching transistors Q2 and Q4 are turned off simultaneously, which is not described in detail subsequently. For details, reference may be made to the prior art.

(2) When the switching transistors Q2 and Q4 are turned on simultaneously, the process is just reverse to (1). In this case, the inductor 111 is charged, and the second current IF is increased. At the same time, the capacitor 113 is also charged, and the output voltage VC is increased.

It can be seen that, the main circuit 11 may adjust values of the second current IF and the output voltage VC by switching conductivity statuses of the switching transistors (Q1 and Q3) and the switching transistors (Q2 and Q4).

In this implementation manner, because the main circuit 11 uses an implementation manner of full-bridge inversion, a voltage stress and a loss borne by the main circuit 11 may be reduced. Therefore, the active filter using the main circuit 11 may be used in a scenario of a relatively high voltage.

In another implementation manner of this embodiment, the specific circuit structure of the main circuit 11 may be further shown in FIG. 4. In FIG. 4, the main circuit 11 includes an inductor 111, a capacitor 113, a fifth switching transistor Q5, and a sixth switching transistor Q6, where the sixth switching transistor Q6 is connected in parallel with a series circuit including the capacitor 113 and the fifth switching transistor Q5, one end of the sixth switching transistor Q6 is coupled to one end of the inductor 11, and another end of the sixth switching transistor Q6 is separately coupled to the negative electrode of the power source 4 and the negative electrode of the input end of the conversion circuit 2, that is, as shown in FIG. 2, jointly coupled to a node d; the other end of the inductor 111 is separately coupled to the positive electrode of the power source 4 and the positive electrode of the input end of the conversion circuit 2, that is, as shown in FIG. 2, jointly coupled to the node d. Similarly, herein, the inductor 111 may be a filter inductor, and the capacitor 113 may include an energy storage capacitor or a group of energy storage capacitors. The control signal generated by the control circuit 12 may also include a first control signal and a second control signal, where the second control signal is a signal having a phase opposite to a phase of the first control signal. In this case, a control end of the fifth switching transistor Q5 receives the first control signal, for example, V_GATE1, and a control end of the sixth switching transistor Q6 receives the second control signal, for example, V_GATE2.

The main circuit 11 is configured to perform, under control of the control signal, conductivity switching on the fifth switching transistor Q5 and the sixth switching transistor Q6, and thereby control charging or discharging of the inductor 111 and charging or discharging of the capacitor 113 to generate the second current IF.

A process in which the main circuit 11 performs conductivity switching on the fifth switching transistor Q5 and the sixth switching transistor Q6 and thereby controls charging or discharging of the inductor 111 and charging or discharging of the capacitor 113 is as follows: When the fifth switching transistor Q5 is turned on, the inductor 111 is discharged, the second current IF is reduced, the capacitor 113 is also discharged, and the voltage VC of the capacitor 113 is reduced.

When the sixth switching transistor Q6 is turned on, the inductor 111 is charged, the second current IF is increased, and the voltage VC of the capacitor 113 is increased.

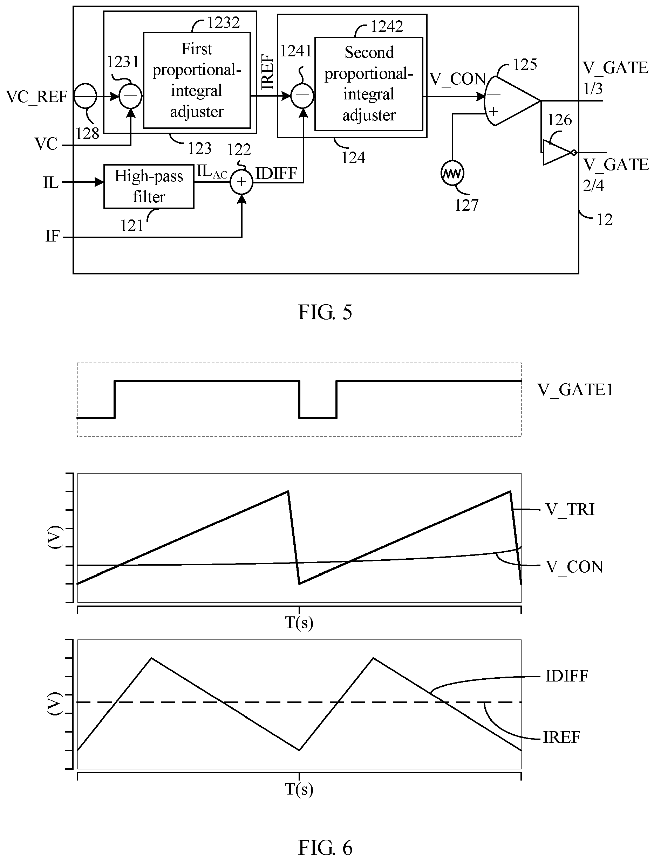

Further, herein, with reference to FIG. 3 and FIG. 4, a specific structure of the control circuit 12 in this embodiment of the present invention is described. In an implementation manner of this embodiment of the present invention, as shown in FIG. 5, the control circuit 12 includes a high-pass filter 121, an adder 122, a first proportional-integral controller 123, a second proportional-integral controller 124, a voltage comparator 125, and a phase inverter 126. The control circuit 12 may be configured to control the main circuit 11 shown in FIG. 3, and may also be configured to control the main circuit 11 shown in FIG. 4.

The high-pass filter 121 is configured to receive the first current IL, and perform filtering to obtain the harmonic component $IL_{AC}$. Using the high-pass filter 121 to perform high-pass filtering is to remove some low-frequency components that are unnecessary or insignificant, to obtain a high-frequency component that can reflect a present current fluctuation in the communications system, where a filter parameter may be determined according to an empirical value or through simulation calculation, or the like, which is not limited herein. For details, reference may be made to the prior art.

The adder 122 is configured to respectively receive the harmonic component $IL_{AC}$ and the second current IF through two output ends, and perform addition to obtain a third current IDIFF and output the third current.

The first proportional-integral controller 123 is configured to: separately receive a preset first reference voltage VC_REF and the output voltage VC that is of the main circuit 11, that is, the voltage VC between two ends of the capacitor 113, and after subtracting the output voltage VC from the first reference voltage VC_REF, perform first proportional integration to obtain a fourth current IREF. A person skilled in the art should know that the first reference voltage VC_REF may be set according to an empirical value or determined by means of simulation, test, or the like. The first proportional-integral controller 123 may be further referred to as a voltage loop proportional-integral controller, and may be specifically divided into a first subtractor 1231 and a first proportional-integral adjuster 1232, where two input ends of the first subtractor 1231 are used to respectively receive the first reference voltage VC_REF and the output voltage VC. After the subtraction operation is performed, the first proportional-integral adjuster 1232 performs first proportional integration on a difference obtained after the output voltage VC is subtracted from the first reference voltage VC_REF, to obtain the fourth current IREF and output the fourth current, which is not further described in detail herein. For details, reference may be made to the prior art. With respect to a gain (including an integral gain and a proportional gain) of the first proportional-integral controller 123, different gain functions may be preset for different application scenarios. A person skilled in the art should know that a principle of setting a gain function is generally that the higher a gain is, the better it will be, which is not specifically limited herein, provided that a stable current loop of the communications system is ensured.

The second proportional-integral controller 124 is configured to: separately receive the third current IDIFF and the fourth current IREF, and after subtracting the third current IDIFF from the fourth current IREF, perform second proportional integration to obtain a first comparative voltage V_CON. Likewise, the second proportional-integral controller 124 may be referred to as a current loop proportional-integral controller, and may also be specifically divided into a second subtractor 1241 and a second proportional-integral adjuster 1242. With respect to a gain of the first proportional-integral controller 123, different gain functions may also be preset for different application scenarios.

The voltage comparator 125 receives the first comparative voltage V_CON through an inverting input end, and receives a preset second reference voltage V TRI through a non-inverting input end, and is configured to: compare the first comparative voltage V_CON with the second reference voltage V_TRI, generate the first control signal according to a comparison result, and separately provide the first control signal to the first switching transistor Q1 and the third switching transistor Q3 that are shown in FIG. 3 to control conductivity of the first switching transistor Q1 and the third switching transistor Q3, or provide the first control signal to the fifth switching transistor Q5 shown in FIG. 4 to control conductivity of the fifth switching transistor Q5. It should be known that a principle of the voltage comparator 125 is: when a voltage of the non-inverting input end is higher than a voltage of the inverting input end, a high-level signal is output; when a voltage of the non-inverting input end is lower than a voltage of the inverting input end, a low-level signal is output. In this embodiment, optionally, the voltage comparator 125 may further receive the first comparative voltage V_CON through the non-inverting input end, and receive the preset second reference voltage V_TRI through the inverting input end, but logic in comparison is opposite, which is not limited in this embodiment.

The phase inverter 126 is configured to invert the phase of the first control signal to generate the second control signal, and separately provide the second control signal to the second switching transistor Q2 and the fourth switching transistor Q4 that are shown in FIG. 3 to control conductivity of the second switching transistor Q2 and the fourth switching transistor Q4, or provide the second control signal to the sixth switching transistor Q6 shown in FIG. 4 to control conductivity of the sixth switching transistor Q6.

Optionally, the control circuit 12 may further include a reference voltage source 128, configured to provide the first reference voltage VC_REF.

Optionally, the control circuit 12 may further include a signal generator 127, configured to provide the second reference voltage V_TRI. Exemplarily, the signal generator 127 may be a triangular wave generator, or a signal generator of another wave form.

Specifically, the second reference voltage V_TRI may be a periodic triangular wave signal, and therefore, in any period of the triangular wave signal, that the voltage comparator 125 generates the first control signal according to the comparison result includes:

if the first comparative voltage V_CON is higher than a level of the triangular wave signal V_TRI, generating the first control signal for turning off the first switching transistor Q1 and the third switching transistor Q3 or turning off the fifth switching transistor Q5; or
if the first comparative voltage V_CON is lower than a level of the triangular wave signal V_TRI, generating the control signal for turning on the first switching transistor Q1 and the third switching transistor Q3 or turning on the fifth switching transistor Q5.

It should be noted that in this embodiment, a bandwidth of the second proportional-integral adjuster 124 is far greater than a bandwidth of the first proportional-integral controller 123, which ensures that within several open-loop periods, the fourth current IREF output by the first proportional-integral controller 123 may be a constant value. However, if the voltage VC of the capacitor 113 changes within a long time, for example, if the voltage VC is reduced, the fourth current IREF is caused to rise by using the second proportional-integral controller, and at the same time, the first comparative voltage V_CON is also caused to rise. If the voltage comparator 125 determines that the first comparative voltage V_CON is higher than the preset triangular wave signal V_TRI, the voltage comparator 125 generates the first control signal for turning off the first switching transistor Q1 and the third switching transistor Q3 or turning off the fifth switching transistor Q5; at the same time, the phase inverter 126 generates the second control signal for turning on the second switching transistor Q2 and the fourth switching transistor Q4, or turning on the sixth switching transistor Q6, so that the inductor 111 in the main circuit 11 is charged, and the capacitor 113 is also charged. Correspondingly, the voltage VC of the capacitor 113 is also increased, so that the fourth current IREF output by the first proportional-integral controller 123 and the voltage VC of the capacitor 113 keep constant.

The following further describes a principle of generating the first control signal with reference to FIG. 6 by using an example in which the first switching transistor Q1 and the third switching transistor Q3 are NMOS transistors, or the fifth switching transistor Q5 is an NMOS transistor, and the voltage comparator 125 receives the first comparative voltage V_CON through the inverting input end, and receives the preset second reference voltage V_TRI through the non-inverting input end.

First, it should be noted that conductivity characteristics of the NMOS transistor include: when a voltage of a gate is of a high level, a source and a drain of the NMOS transistor are connected; when a voltage of the gate is of a low level, the source and the drain of the NMOS transistor are disconnected. Contrary to the NMOS transistor, for a switching transistor of another type, for example, a PMOS transistor, when a voltage of a gate of the PMOS transistor is of a high level, a source and a drain of the PMOS transistor are disconnected; when a voltage of the gate of the PMOS transistor is of a low level, the source and the drain of the PMOS transistor are connected. In this case, the voltage comparator 125 needs to receive the first comparative voltage V_CON through the non-inverting input end, and receive the second reference voltage V_TRI through the inverting input end. A person skilled in the art may perform extension based on this. Therefore, the switching transistor in this embodiment of the present invention is not limited to the PMOS transistor or the NOMS transistor.

In an actual circuit, elements in the main circuit 11 may generate some energy losses inevitably. It is necessary to compensate for this part of energy losses, or otherwise, the voltage VC of the capacitor 113 in the main circuit 11 may fall. Once the voltage VC falls and is lower than an upper limit of a bus voltage, a current of the inductor 111 in the main circuit 11 cannot be discharged, and consequently, the main circuit 11 cannot have a filter effect. Therefore, to maintain the voltage VC of the capacitor 113, theoretically, the harmonic component $IL_{AC}$ of the first current IL and the second current IF need to meet a relationship shown in a formula (5):

$$IF + IL_{AC} = IREF \qquad (5)$$

where, IREF is the fourth current.

Therefore, in order that the active filter 1 can suppress low-frequency noise caused by the load 3, the control circuit 12 needs to use, in a control process, the principle shown in the formula (5) to perform control, and specifically, needs to acquire the sum of the second current IF and the harmonic component $IL_{AC}$ in real time, that is, the third current IDIFF, then use the fourth current IREF as a reference value, so that the third current IDIFF traces the fourth current IREF in real time. Because it may be considered that the first comparative voltage V_CON is quasi-proportional to a difference between the third current IDIFF and the fourth current IREF, a process of generating the first control signal by the voltage comparator 125 is as follows:

When the first comparative voltage V_CON is higher than the level of the triangular wave signal V_TRI, it indicates that the real-time third current IDIFF is less than the fourth current IREF. Therefore, the second current IF needs to be increased, so that the real-time third current IDIFF is approximate to the fourth current IREF, that is, the inductor 111 and/or the capacitor 113 in the main circuit 11 needs to be controlled to be in a charged state to increase the real-time second current IF. Therefore, the voltage comparator 125 may generate a first control signal of a low level, so that the NMOS transistor is turned off.

When the first comparative voltage V_CON is lower than the level of the triangular wave signal V_TRI, it indicates that the real-time third current IDIFF is greater than the fourth current IREF. Therefore, the second current IF needs to be reduced, that is, the inductor 111 and/or the capacitor 113 in the main circuit 11 needs to be controlled to be in a discharged state to reduce the real-time second current IF. Therefore, the voltage comparator 125 may generate a first control signal of a high level, so that the NMOS transistor is turned on. This control manner is a pulse-width modulation (Pulse-Width Modulation, PWM) manner, and is applicable to a scenario in which a requirement on a filter indicator is relatively low. Because the second control signal for controlling the second switching transistor Q2 and the fourth switching transistor Q4 or the sixth switching transistor Q6 is a signal having a phase opposite to the phase of the first control signal. Their control logic is just opposite, and details are not described herein again.

It should be known that, in the foregoing process of generating the first control signal, the NMOS transistor is used as an example. If both the first switching transistor Q1 and the third switching transistor Q3 are PMOS transistors, or the fifth switching transistor Q5 is a PMOS transistor, the non-inverting input end of the voltage comparator 125 needs to be used to receive the first comparative voltage V_CON, and the inverting input end needs to be used to receive the second reference voltage V_TRI, so that the levels of the generated first control signal are just opposite.

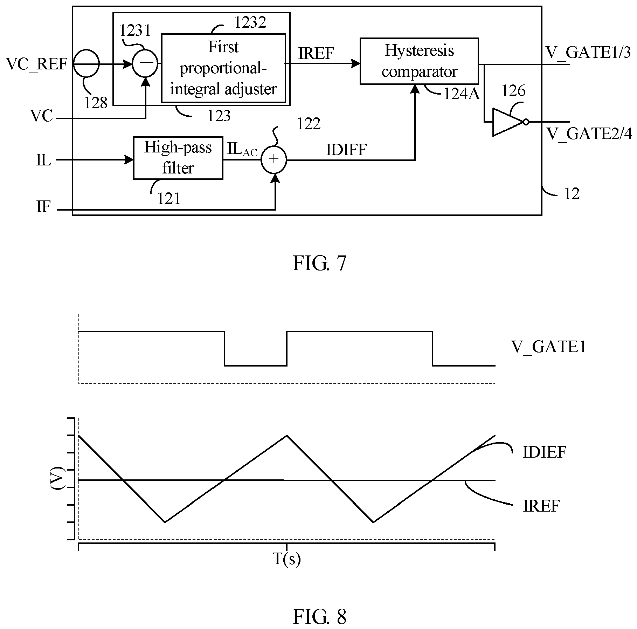

Further, in another implementation manner of this embodiment of the present invention, as shown in FIG. 7, a control circuit 12 is further provided. Herein, a specific structure of the control circuit 12 shown in FIG. 7 is described still with reference to FIG. 3 and FIG. 4. The control circuit 12 may be configured to control the main circuit 11 shown in FIG. 3, and may also be configured to control the main circuit 11 shown in FIG. 4. The control circuit 12 includes a high-pass filter 121, an adder 122, a first proportional-integral controller 123, a hysteresis comparator 124A, and a phase inverter 126. For ease of description, elements that are the same as those in the control circuit 12 shown in FIG. 5 are marked with same numbers herein. For details, reference may be made to the description about the elements in the foregoing implementation manners.

The high-pass filter 121 is configured to receive the first current IL, and perform filtering to obtain the harmonic component $IL_{AC}$.

The adder 122 is configured to separately receive the harmonic component $IL_{AC}$ and the second current IF, and perform addition to obtain a third current IDIFF.

The first proportional-integral controller 123 is configured to: separately receive a preset first reference voltage VC_REF and an output voltage VC of the main circuit 11, and after subtracting the output voltage VC from the first reference voltage VC_REF, perform first proportional integration to obtain a fourth current IREF.

The hysteresis comparator 124A is configured to compare the third current IDIFF with the fourth current IREF, and generate the first control signal according to a comparison result, and separately provide the first control signal to the first switching transistor Q1 and the third switching transistor Q3 to control conductivity of the first switching transistor Q1 and the third switching transistor Q3, or provide the first control signal to the fifth switching transistor Q5 to control conductivity of the fifth switching transistor Q5. It should be noted that, by using the hysteresis comparison control manner, the control circuit traces the first circuit IL at a higher speed, which is advantageous for improving filter performance, and is applicable to a scenario in which a filter requirement is high and a cost requirement is low.

The phase inverter 126 is configured to invert the phase of the first control signal to generate the second control signal, and separately provide the second control signal to the second switching transistor Q2 and the fourth switching transistor Q4 to control conductivity of the second switching transistor Q2 and the fourth switching transistor Q4, or provide the second control signal to the sixth switching transistor Q6 to control conductivity of the sixth switching transistor Q6.

Optionally, the control circuit 12 may further include a reference voltage source 128, configured to provide the first reference voltage VC_REF.

Specifically, that the hysteresis comparator 124A generates the first control signal according to the comparison result includes:

if the third current IDIFF is greater than the fourth current IREF, generate the first control signal for turning on the first switching transistor Q1 and the third switching transistor Q3 or turning on the fifth switching transistor Q5, so that the inductor 111 and/or the capacitor 113 in the main circuit 11 is in a discharged state, and the real-time second current IF is reduced; or

if the third current IDIFF is less than the fourth current IREF, generate the first control signal for turning off the first switching transistor Q1 and the third switching transistor Q3 or turning off the fifth switching transistor Q5, so that the inductor 111 and/or the capacitor 113 in the main circuit 11 is in a charged state, and the real-time second current IF is increased.

The following further describes a principle of generating the first control signal by the hysteresis comparator 124A with reference to FIG. 8 still by using an example in which the first switching transistor Q1 and the third switching transistor Q3 are NMOS transistors, or the fifth switching transistor Q5 is an NMOS transistor.

As described above, when the main circuit 11 suppresses low-frequency noise, the third current IDIFF needs to trace the fourth current IREF in real time. Therefore, the process of generating the first control signal by the hysteresis comparator 124A is as follows:

When the third current IDIFF is greater than the sum of the fourth current IREF and a preset hysteresis value hys, that is, the following formula is met:

$$I\_DIFF > IREF + hys \qquad\qquad (6)$$

to trace the fourth current IREF, it is necessary to reduce the second current IF, so that the real-time third current IDIFF is approximate to the fourth current IREF, that is, the inductor 111 and/or the capacitor 113 in the main circuit 11 needs to be controlled to be in a discharged state to reduce the real-time second current IF; therefore, the hysteresis comparator 124A may generate a first control signal of a high level, where the hysteresis value hys is generally set to a small value. For the specific setting of the hysteresis value hys and the principle of hysteresis comparison, reference may be made to the prior art.

When the third current IDIFF is less than a difference between the fourth current IREF and the hysteresis value hys, that is:

$$I\_DIFF < IREF - hys \qquad\qquad (7)$$

it is necessary to increase the second current IF, so that the real-time third current IDIFF is approximate to the fourth current IREF, that is, the inductor 111 and/or the capacitor 113 in the main circuit 11 needs to be controlled to be in a charged state to increase the real-time second current IF; therefore, the hysteresis comparator 124A may generate a first control signal of a low level.

In this embodiment of the present invention, because the second control signal for controlling the second switching transistor Q2 and the fourth switching transistor Q4 or the sixth switching transistor Q6 is a signal having a phase opposite to a phase of the first control signal. Their control logic is just opposite, and details are not described herein again.

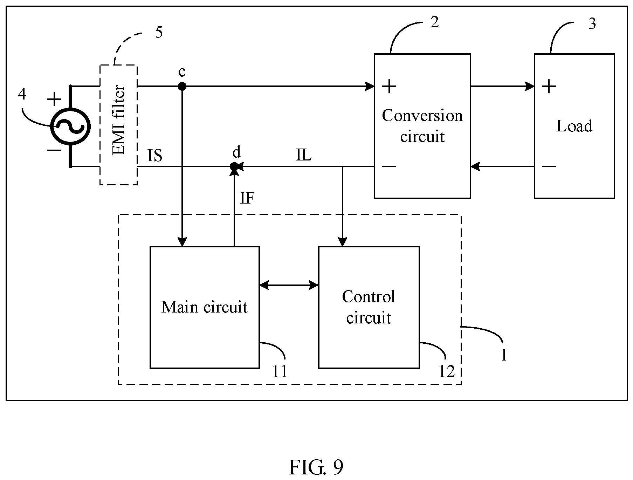

Further, optionally, the communications system using the passive filter as shown in FIG. 9 may further include an electromagnetic interference filter 5. For other elements, reference may be made to FIG. 2.

The electromagnetic interference filter 5 is connected in parallel between the power source 4 and the active filter 1, and configured to suppress high-frequency interference in the communications system.

In this embodiment, a control circuit 12 generates a control signal to control a main circuit 11 to generate a second current IF having a phase opposite to a phase of a harmonic component $IL_{AC}$, so as to cancel the harmonic component $IL_{AC}$ and effectively suppress low-frequency noise caused by a non-linear load 3. Therefore, a disadvantage that a volume of a filter is huge, which cannot meet a filter requirement of a high-power device, and the like in the prior art are avoided, and it is ensured that an input current is approximate to a direct current. In addition, compared with a passive filter used by a communications device in the prior art, the active filter provided in this embodiment, on the one hand, may reduce a cost of the communications system significantly, and on the other hand, may meet a filter requirement for miniaturization of the high-power communications system because the volume of the active filter is small.

**Claims**

1.  An active filter (1), wherein the active filter (1) is connected in parallel between a power source (4) and an input end of a conversion circuit (2), wherein an input end of the active filter (1) is separately coupled to a positive electrode of the power source (4) and a positive electrode of the input end of the conversion circuit (2), an output end of the active filter (1) is separately coupled to a negative electrode of the power source (4) and a negative electrode of the input end of the conversion circuit (2), and the active filter (1) comprises a control circuit (12) and a main circuit (11), wherein:

    the control circuit (12) is configured to: detect a first current IL output by the negative electrode of the input end of the conversion circuit (2) to acquire a harmonic component in the first current IL, and generate a control signal according to the harmonic component; and
    the main circuit (11) is configured to generate, under control of the control signal, a second current IF having a phase opposite to a phase of the harmonic component, and output the second current IF through the output end of the active filter (1), so that a source current IS output by the power source (4) and formed after the first current IL and the second current IF pass through the power source (4) is a direct current and satisfies the formula IS = IF + IL, wherein the control signal comprises a first control signal and a second control signal, wherein the second control signal is a signal having a phase opposite to a phase of the first control signal;
    the main circuit (11) comprises:

a full-bridge circuit (112), an inductor (111), and a capacitor (113), wherein the full-bridge circuit (112) comprises a first switching transistor (Q1), a second switching transistor (Q2), a third switching transistor (Q3), and a fourth switching transistor (Q4), wherein a series circuit comprising the first switching transistor (Q1) and the fourth switching transistor (Q4) is separately connected in parallel with the capacitor (113) and a series circuit comprising the second switching transistor (Q2) and the third switching transistor (Q3), one end of the inductor (111) is coupled to a node between the first switching transistor (Q1) and the fourth switching transistor (Q4), the other end of the inductor (111) is used as the input end of the active filter (1), a node between the second switching transistor (Q2) and the third switching transistor (Q3) is used as the output end of the active filter (1), control ends of the first switching transistor (Q1) and the third switching transistor (Q3) separately receive the first control signal, and control ends of the second switching transistor (Q2) and the fourth switching transistor (Q4) separately receive the second control signal; and
the main circuit (11) is configured to perform, under control of the control signal, conductivity switching on the full-bridge circuit (112), and thereby control charging or discharging of the inductor (111) and charging or discharging of the capacitor (113) to generate the second current IF, wherein the control circuit (12) comprises a high-pass filter (121), an adder (122), a first proportional-integral controller (123), a second proportional-integral controller (124), a voltage comparator (125), and a phase inverter (126), wherein:

the high-pass filter (121) is configured to receive the first current IL, and perform filtering to obtain the harmonic component;

the adder (122) is configured to separately receive the harmonic component and the second current IF, and perform addition to obtain a third current;

the first proportional-integral controller (123) is configured to: separately receive a preset first reference voltage and an output voltage that is of the main circuit (11), and after subtracting the output voltage from the first reference voltage, perform first proportional integration to obtain a fourth current, wherein the output voltage of the main circuit (11) is a voltage between two ends of the capacitor (113);

the second proportional-integral controller (124) is configured to: separately receive the third current and the fourth current, and after subtracting the third current from the fourth current, perform second proportional integration to obtain a first comparative voltage;

the voltage comparator (125) is configured to compare the first comparative voltage with a preset second reference voltage, generate the first control signal according to a comparison result, and input the first control signal to the main circuit (11) and the phase inverter (126); and

the phase inverter (126) is configured to: invert the phase of the first control signal to obtain the second control signal, and input the second control signal to the main circuit (11).

2. The active filter (1) according to claim 1, wherein the second reference voltage is a periodic triangular wave signal, and therefore, in any period, the voltage comparator (125) is specifically configured to:

if the first comparative voltage is higher than a level of the triangular wave signal, generate the first control signal for turning off the first switching transistor (Q1) and the third switching transistor (Q3);

if the first comparative voltage is lower than a level of the triangular wave signal, generate the first control signal for turning on the first switching transistor (Q1) and the third switching transistor (Q3).

3. The active filter (1) according to claim 2, wherein the hysteresis comparator (124A) is specifically configured to:

if the third current is greater than the fourth current, generate the first control signal for turning on the first switching transistor (Q1) and the third switching transistor (Q3);

if the third current is less than the fourth current, generate the first control signal for turning off the first switching transistor (Q1) and the third switching transistor (Q3).

4. The active filter (1) according to any one of claims 1 to 3, wherein the inductor (111) is a filter inductor, and the capacitor (113) is an energy storage capacitor or a group of energy storage capacitors.

5. A communications system, wherein the communications system comprises a power source (4), a conversion circuit (2), a non-linear load (3), and the active filter (1) according to any one of claims 1 to 4, wherein:

the power source (4) is configured to output a source current IS; and

the conversion circuit (2) is configured to: receive the source current IS through an input end, and after performing direct current/direct current conversion, output a converted current to the non-linear load (3) through an output end, to supply power to the non-linear load (3).

6.  The communications system according to claim 5, wherein the communications system further comprises an electromagnetic interference filter (5), wherein the electromagnetic interference filter (5) is connected in parallel between the power source (4) and the active filter (1), and configured to suppress high-frequency interference in the communications system.


**Patentansprüche**

1.  Aktives Filter (1), wobei das aktive Filter (1) zwischen einer Stromquelle (4) und einem Eingangsende eines Wandlungsschaltkreises (2) parallel geschaltet ist, wobei ein Eingangsende des aktiven Filters (1) getrennt mit einer positiven Elektrode der Stromquelle (4) und einer positiven Elektrode des Eingangsendes des Wandlungsschaltkreises (2) verbunden ist, ein Ausgangsende des aktiven Filters (1) getrennt mit einer negativen Elektrode der Stromquelle (4) und einer negativen Elektrode des Eingangsendes des Wandlungsschaltkreises (2) verbunden ist, und das aktive Filter (1) einen Steuerkreis (12) und einen Hauptschaltkreis (11) umfasst, wobei:

    der Steuerkreis (12) ausgelegt ist: einen von der negativen Elektrode des Eingangsendes des Wandlungsschaltkreises (2) ausgegebenen ersten Strom IL zu detektieren, um eine harmonische Komponente im ersten Strom IL zu erfassen, und ein Steuersignal gemäß der harmonischen Komponente zu erzeugen; und
    der Hauptschaltkreis (11) ausgelegt ist, unter Steuerung des Steuersignals einen zweiten Strom IF zu erzeugen, der eine Phase aufweist, die zu einer Phase der harmonischen Komponente entgegengesetzt ist, und den zweiten Strom IF durch das Ausgangsende des aktiven Filters (1) auszugeben, so dass ein Quellenstrom IS, der von der Stromquelle (4) ausgegeben und gebildet wird, nachdem der erste Strom IL und der zweite Strom IF durch die Stromquelle (4) fließen, ein Gleichstrom ist und die Formel IS = IF + IL erfüllt, wobei das Steuersignal ein erstes Steuersignal und ein zweites Steuersignal umfasst, wobei das zweite Steuersignal ein Signal ist, das eine Phase aufweist, die einer Phase des ersten Steuersignals entgegengesetzt ist;
    wobei der Hauptschaltkreis (11) umfasst:

        einen Vollbrückenschaltkreis (112), eine Induktivität (111) und einen Kondensator (113), wobei der Vollbrückenschaltkreis (112) einen ersten Schalttransistor (Q1), einen zweiten Schalttransistor (Q2), einen dritten Schalttransistor (Q3) und einen vierten Schalttransistor (Q4) umfasst, wobei ein den ersten Schalttransistor (Q1) und den vierten Schalttransistor (Q4) umfassender Reihenstromkreis getrennt zum Kondensator (113) und einem den zweiten Schalttransistor (Q2) und den dritten Schalttransistor (Q3) umfassenden Reihenstromkreis parallel geschaltet ist, ein Ende der Induktivität (111) mit einem Knoten zwischen dem ersten Schalttransistor (Q1) und dem vierten Schalttransistor (Q4) verbunden ist, das andere Ende der Induktivität (111) als Eingangsende des aktiven Filters (1) verwendet wird, ein Knoten zwischen dem zweiten Schalttransistor (Q2) und dem dritten Schalttransistor (Q3) als Ausgangsende des aktiven Filters (1) verwendet wird, Steuerenden des ersten Schalttransistors (Q1) und des dritten Schalttransistors (Q3) getrennt das erste Steuersignal empfangen, und Steuerenden des zweiten Schalttransistors (Q2) und des vierten Schalttransistors (Q4) getrennt das zweite Steuersignal empfangen; und
        der Hauptschaltkreis (11) ausgelegt ist, unter Steuerung des Steuersignals ein Leitfähigkeitsschalten des Vollbrückenschaltkreises (112) durchzuführen und dadurch ein Laden oder Entladen des Induktors (111) und Laden oder Entladen des Kondensators (113) zu steuern, um den zweiten Strom IF zu erzeugen, wobei der Steuerkreis (12) ein Hochpassfilter (121), einen Addierer (122), einen ersten Proportional-Integral-Regler (123), einen zweiten Proportional-Integral-Regler (124), einen Spannungskomparator (125) und einen Phasenumkehrschalter (126) umfasst, wobei:

            das Hochpassfilter (121) ausgelegt ist, den ersten Strom IL zu empfangen und eine Filterung durchzuführen, um die harmonische Komponente zu erhalten;
            der Addierer (122) ausgelegt ist, die harmonische Komponente und den zweiten Strom IF getrennt zu empfangen und eine Addition durchzuführen, um einen dritten Strom zu erhalten;
            der erste Proportional-Integral-Regler (123) ausgelegt ist: eine voreingestellte erste Referenzspannung und eine Ausgangsspannung des Hauptschaltkreises (11) getrennt zu empfangen, und nach Subtrahieren der Ausgangsspannung von der ersten Referenzspannung eine erste Proportionalintegration durchzuführen, um einen vierten Strom zu erhalten, wobei die Ausgangsspannung des Hauptschaltkreises (11) eine Spannung zwischen zwei Enden des Kondensators (113) ist;
            der zweite Proportional-Integral-Regler (124) ausgelegt ist: den dritten Strom und den vierten Strom getrennt zu empfangen, und nach Subtrahieren des dritten Stroms vom vierten Strom eine zweite Proportionalintegration durchzuführen, um eine erste Vergleichsspannung zu erhalten;

der erste Spannungskomparator (125) ausgelegt ist, die erste Vergleichsspannung mit einer voreingestellten zweiten Referenzspannung zu vergleichen, das erste Steuersignal gemäß einem Vergleichsergebnis zu erzeugen, und das erste Steuersignal in den Hauptschaltkreis (11) und den Phasenumkehrschalter einzugeben (126); und

der Phasenumkehrschalter (126) ausgelegt ist: die Phase des ersten Steuersignals umzukehren, um das zweite Steuersignal zu erhalten, und das zweite Steuersignal in den Hauptschaltkreis (11) einzugeben.

2. Aktives Filter (1) gemäß Anspruch 1, wobei die zweite Referenzspannung ein periodisches Dreieckswellensignal ist und daher, in jeder Periode, der Spannungskomparator (125) speziell dazu ausgelegt ist:

falls die erste Vergleichsspannung höher als ein Pegel des Dreieckswellensignals ist, das erste Steuersignal zum Abschalten des ersten Schalttransistors (Q1) und des dritten Schalttransistors (Q3) zu erzeugen;
falls die erste Vergleichsspannung niedriger als ein Pegel des Dreieckswellensignals ist, das erste Steuersignal zum Anschalten des ersten Schalttransistors (Q1) und des dritten Schalttransistors (Q3) zu erzeugen.

3. Aktives Filter (1) gemäß Anspruch 2, wobei der Hysteresekomparator (124A) speziell dazu ausgelegt ist:

falls der dritte Strom größer als der vierte Strom ist, das erste Steuersignal zum Anschalten des ersten Schalttransistors (Q1) und des dritten Schalttransistors (Q3) zu erzeugen;
falls der dritte Strom kleiner als der vierte Strom ist, das erste Steuersignal zum Abschalten des ersten Schalttransistors (Q1) und des dritten Schalttransistors (Q3) zu erzeugen.

4. Aktives Filter (1) gemäß einem der Ansprüche 1 bis 3, wobei die Induktivität (111) eine Filterinduktivität ist und der Kondensator (113) ein Energiespeicherkondensator oder eine Gruppe von Energiespeicherkondensatoren ist.

5. Kommunikationssystem, wobei das Kommunikationssystem eine Stromquelle (4), einen Wandlungsschaltkreis (2), einen nichtlinearen Verbraucher (3) und das aktive Filter (1) gemäß einem der Ansprüche 1 bis 4 umfasst, wobei:

die Stromquelle (4) ausgelegt ist, einen Quellenstrom IS auszugeben; und
der Wandlungsschaltkreis (2) ausgelegt ist: den Quellenstrom IS durch ein Eingangsende zu empfangen und nach dem Durchführen der DC/DC-Wandlung einen gewandelten Strom an den nichtlinearen Verbraucher (3) durch ein Ausgangsende auszugeben, um den nichtlinearen Verbraucher (3) mit Strom zu versorgen.

6. Kommunikationssystem gemäß Anspruch 5, wobei das Kommunikationssystem ferner ein elektromagnetisches Interferenzfilter (5) umfasst, wobei das elektromagnetische Interferenzfilter (5) zwischen der Stromquelle (4) und dem aktiven Filter (1) parallel geschaltet ist, und ausgelegt ist, Hochfrequenzstörungen im Kommunikationssystem zu unterdrücken.

**Revendications**

1. Filtre actif (1), le filtre actif (1) étant connecté en parallèle entre une source d'alimentation (4) et une extrémité d'entrée d'un circuit de conversion (2), dans lequel une extrémité d'entrée du filtre actif (1) est couplée séparément à une électrode positive de la source d'alimentation (4) et à une électrode positive de l'extrémité d'entrée du circuit de conversion (2), une extrémité de sortie du filtre actif (1) est couplée séparément à une électrode négative de la source d'alimentation (4) et à une électrode négative de l'extrémité d'entrée du circuit de conversion (2), et le filtre actif (1) comprenant un circuit de commande (12) et un circuit principal (11), dans lequel :

le circuit de commande (12) est configuré pour : détecter un premier courant IL délivré par l'électrode négative de l'extrémité d'entrée du circuit de conversion (2) pour acquérir une composante harmonique dans le premier courant IL, et générer un signal de commande en fonction de la composante harmonique ; et
le circuit principal (11) est configuré pour générer, sous la commande du signal de commande, un deuxième courant IF ayant une phase opposée à une phase de la composante harmonique, et délivrer le deuxième courant IF par l'intermédiaire de l'extrémité de sortie du filtre actif (1), de telle sorte qu'un courant de source IS délivré par la source d'alimentation (4) et formé après que le premier courant IL et le deuxième courant IF sont passés à travers la source d'alimentation (4) est un courant continu et satisfait la formule IS = IF + IL, dans lequel le signal de commande comprend un premier signal de commande et un deuxième signal de commande, dans lequel le deuxième signal de commande est un signal ayant une phase opposée à une phase du premier signal de commande ;

le circuit principal (11) comprend :

un circuit en pont complet (112), une bobine d'induction (111), et un condensateur (113), dans lequel le circuit en pont complet (112) comprend un premier transistor de commutation (Q1), un deuxième transistor de commutation (Q2), un troisième transistor de commutation (Q3) et un quatrième transistor de commutation (Q4), dans lequel un circuit série comprenant le premier transistor de commutation (Q1) et le quatrième transistor de commutation (Q4) est connecté séparément en parallèle avec le condensateur (113) et un circuit série comprenant le deuxième transistor de commutation (Q2) et le troisième transistor de commutation (Q3), une extrémité de la bobine d'induction (111) est couplée à un nœud entre le premier transistor de commutation (Q1) et le quatrième transistor de commutation (Q4), l'autre extrémité de la bobine d'induction (111) est utilisée comme extrémité d'entrée du filtre actif (1), un nœud entre le deuxième transistor de commutation (Q2) et le troisième transistor de commutation (Q3) est utilisé comme extrémité de sortie du filtre actif (1), des extrémités de commande du premier transistor de commutation (Q1) et du troisième transistor de commutation (Q3) reçoivent séparément le premier signal de commande, et des extrémités de commande du deuxième transistor de commutation (Q2) et du quatrième transistor de commutation (Q4) reçoivent séparément le deuxième signal de commande ; et

le circuit principal (11) est configuré pour effectuer, sous la commande du signal de commande, une commutation de conductivité sur le circuit en pont complet (112), et commander ainsi la charge ou la décharge de la bobine d'induction (111) et la charge ou la décharge du condensateur (113) pour générer le deuxième courant IF, dans lequel le circuit de commande (12) comprend un filtre passe-haut (121), un additionneur (122), un premier contrôleur proportionnel-intégral (123), un deuxième contrôleur proportionnel-intégral (124), un comparateur de tension (125), et un inverseur de phase (126), dans lequel :

le filtre passe-haut (121) est configuré pour recevoir le premier courant IL, et effectuer un filtrage pour obtenir la composante harmonique ;

l'additionneur (122) est configuré pour recevoir séparément la composante harmonique et le deuxième courant IF, et effectuer une addition pour obtenir un troisième courant ;

le premier contrôleur proportionnel-intégral (123) est configuré pour : recevoir séparément une première tension de référence prédéfinie et une tension de sortie qui est du circuit principal (11), et après avoir soustrait la tension de sortie de la première tension de référence, effectuer une première intégration proportionnelle pour obtenir un quatrième courant, dans lequel la tension de sortie du circuit principal (11) est une tension entre deux extrémités du condensateur (113) ;

le deuxième contrôleur proportionnel-intégral (124) est configuré pour : recevoir séparément le troisième courant et le quatrième courant, et après avoir soustrait le troisième courant du quatrième courant, effectuer une deuxième intégration proportionnelle pour obtenir une première tension comparative ;

le comparateur de tension (125) est configuré pour comparer la première tension comparative avec une deuxième tension de référence prédéfinie, générer le premier signal de commande en fonction d'un résultat de comparaison, et appliquer le premier signal de commande au circuit principal (11) et à l'inverseur de phase (126) ; et

l'inverseur de phase (126) est configuré pour : inverser la phase du premier signal de commande pour obtenir le deuxième signal de commande, et appliquer le deuxième signal de commande au circuit principal (11).

2. Filtre actif (1) selon la revendication 1, dans lequel la deuxième tension de référence est un signal d'onde triangulaire périodique et, par conséquent, dans n'importe quelle période, le comparateur de tension (125) est spécialement configuré pour :

si la première tension comparative est supérieure à un niveau du signal d'onde triangulaire, générer le premier signal de commande pour désactiver le premier transistor de commutation (Q1) et le troisième transistor de commutation (Q3) ;

si la première tension comparative est inférieure à un niveau du signal d'onde triangulaire, générer le premier signal de commande pour activer le premier transistor de commutation (Q1) et le troisième transistor de commutation (Q3).

**3.** Filtre actif (1) selon la revendication 2, dans lequel le comparateur à hystérésis (124A) est spécialement configuré pour :

si le troisième courant est supérieur au quatrième courant, générer le premier signal de commande pour activer le premier transistor de commutation (Q1) et le troisième transistor de commutation (Q3) ;
si le troisième courant est inférieur au quatrième courant, générer le premier signal de commande pour désactiver le premier transistor de commutation (Q1) et le troisième transistor de commutation (Q3).

**4.** Filtre actif (1) selon l'une quelconque des revendications 1 à 3, dans lequel la bobine d'induction (111) est une bobine d'induction de filtre, et le condensateur (113) est un condensateur de stockage d'énergie ou un groupe de condensateurs de stockage d'énergie.

**5.** Système de communication, le système de communication comprenant une source d'alimentation (4), un circuit de conversion (2), une charge non linéaire (3), et le filtre actif (1) selon l'une quelconque des revendications 1 à 4, dans lequel :

la source d'alimentation (4) est configurée pour délivrer un courant de source IS ; et
le circuit de conversion (2) est configuré pour : recevoir le courant de source IS par l'intermédiaire d'une extrémité d'entrée, et après avoir effectué une conversion courant continu/courant continu, délivrer un courant converti à la charge non linéaire (3) par l'intermédiaire d'une extrémité de sortie, pour fournir de l'énergie à la charge non linéaire (3).

**6.** Système de communication selon la revendication 5, le système de communication comprenant en outre un filtre anti-perturbations électromagnétiques (5), dans lequel le filtre anti-perturbations électromagnétiques (5) est connecté en parallèle entre la source d'alimentation (4) et le filtre actif (1), et configuré pour supprimer les perturbations à hautes fréquences dans le système de communication.

FIG. 1

FIG. 2

FIG. 3

FIG. 4

FIG. 5

FIG. 6

FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 20130062695 A
- US 5483148 A

- WO 2013152785 A1
- WO 0205412 A1

### Non-patent literature cited in the description

- CONTROL OF DC-SIDE ACTIVE FILTER FOR THREE-PHASE INVERTERS IN AEROSPACE APPLICATIONS" 8TH EUROPEAN CONFERENCE ON POWER ELECTRONICS AND APPLICATIONS. **CROSS A et al.** EPE . EUROPEAN CONFERENCE ON POWER ELECTRONICS AND APPLICATIONS. EPE ASSOCIATION, 07 September 1999, 1-10